# DEMANDE DE BREVET EUROPEEN

(11) **EP 2 055 258 A1**
(43) Date de publication de la demande: **06.05.2009**
(21) Numéro de dépôt: 08305692.9
(22) Date de dépôt: 16.10.2008
(51) Int. Cl.: A61C 1/12, A61C 5/02, A61C 1/14

(54) **Contre-angle utilisé en endodontie**

(30) Priorité: 30.10.2007 US 978798
(71) Demandeur: Micro-Mega International Manufactures, 25000 Besancon (FR)
(72) Inventeur: Badoz, Jean-Marie, 25300, Doubs (FR)
(74) Mandataire: Poupon, Michel

(57) **Abrégé**

Un contre-angle endodontique est muni d'une tête qui supporte un instrument endodontique ayant une tige et une lame. Un raccord associé à la tête fixe la tige dans la tête du contre-angle. La tige est assemblée en permanence dans le corps de la tête et peut tourner librement dans celle-ci.

## Description

### DOMAINE DE L'INVENTION

La présente invention concerne une pièce à main ou contre-angle utilisé en endodontie.

On connaît divers instruments pouvant être utilisés pour préparer ou pour forer les canaux dentaires. Les instruments de ce type peuvent être manuels ou mécanisés, et peuvent fonctionner aussi bien en rotation continue qu'en rotation alternative. Le mouvement de rotation de l'instrument est effectué par la pièce à main à contre-angle sur laquelle est placé instrument.

Ces instruments sont généralement munis d'une tige, définie par la norme ISO 1797, destinée à rentrer dans la tête du contre-angle. La tête du contre-angle est équipée d'un dispositif mécanique destiné à fixé de manière amovible l'instrument à la tête.

Avec les instruments connus, le praticien doit toujours retirer l'instrument de la tige chaque fois qu'il doit effectuer une opération différente, ce qui augmente le risque de se blesser en se piquant et, par conséquent, le risque de contamination du praticien et du patient.

De plus, les dispositifs connus de blocage de l'instrument sur la tige sont encombrants, ce qui empêche de fabriquer de petites têtes et restreint donc en retour la zone visible aux yeux du praticien.

La présente invention remédie à ces divers inconvénients en fournissant une pièce à main endodontique qui ne nécessite pas de changement d'instrument à chaque nouvelle opération.

Pour ce faire, un contre-angle endodontique est muni d'une tête destinée à supporter un instrument endodontique, et d'une fixation destinée à l'assemblage d'une tige associée à l'instrument reçu dans la tête du contre-angle. La tige de l'instrument est assemblée en permanence au corps de la tête et peut tourner librement dans la tête du contre-angle.

Le contre-angle endodontique de la présente invention va être décrit maintenant plus précisément, en référence à la description détaillée fournie ci-dessous ainsi qu'aux dessins suivants.

La figure 1 est une vue de côté en élévation de la pièce à main à contre-angle endodontique de la présente invention.

La figure 2 est une vue éclatée en élévation de la pièce à main à contre-angle illustrée sur la figure 1, montrant la tige de l'instrument retirée de la tête.

La figure 3 est une coupe transversale de la pièce à main à contre-angle illustrée sur la figure 1.

Les figures 4 et 5 sont des variantes du mode de réalisation, vues en plan, de la pièce à main à contre-angle, montrant différentes configurations du raccord où s'engage la tige.

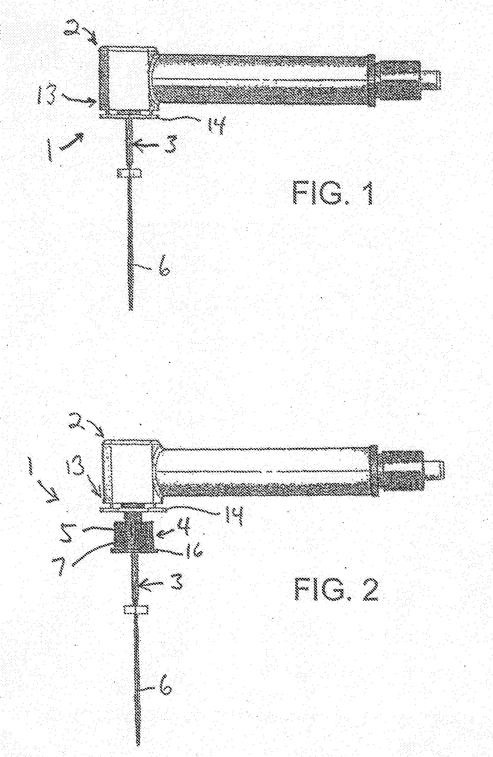

En référence à la figure 1, la pièce à main à contre-angle endodontique 1 comprend une tête 2 qui reçoit un instrument 3 afin de préparer ou de forer un canal. L'instrument 3 peut être n'importe lequel des divers instruments utilisés à cette fin, en fonction des besoins du praticien.

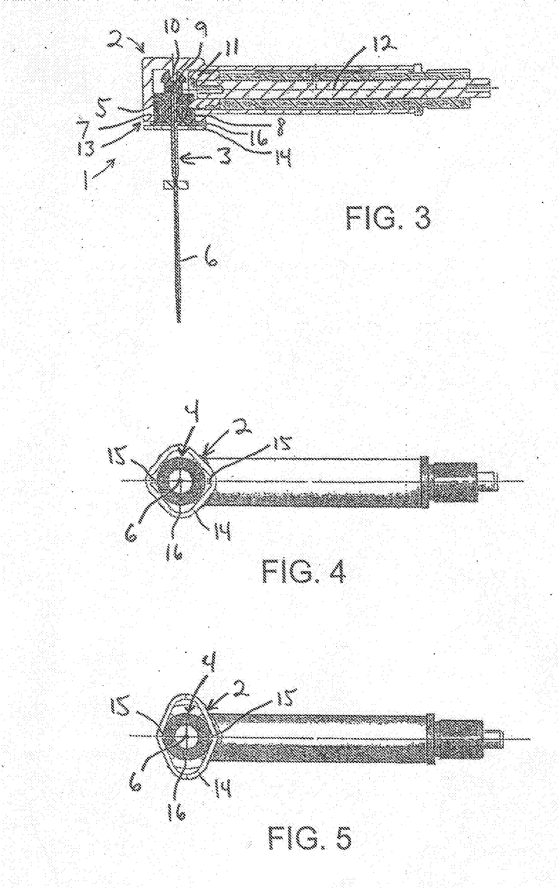

En référence aux figures 2 et 3, l'instrument 3 possède une tige 4 comprenant un entraînement rotatif 5 et une lame 6. La tige 4 de l'instrument 3 coopère avec la tête 2 de la pièce à main à contre-angle 1 pour supporter l'instrument 3 dans la tête 2, et comprend une partie de surface lisse 7 destinée à coopérer avec une ouverture 8 ménagée dans la tête 2 pour favoriser la rotation de l'instrument 3, et un pivot 9 destiné à coopérer avec un axe 10 dépassant des parties supérieures de la tête 2, pour favoriser la rotation de l'instrument 3 et garantir une poussée axiale adéquate de l'instrument 3 dans les parties supérieures de la tête. L'entraînement rotatif 5 de la tige 4 de l'instrument 3 coopère avec l'accouplement 11 d'un arbre d'entraînement 12 qui traverse la pièce à main à contre-angle 1 dans l'axe longitudinal, pour assurer le mouvement de rotation nécessaire au fonctionnement de l'instrument 3. L'entraînement rotatif 5 est de préférence assuré par un pignon.

La tête 2 de la pièce à main à contre-angle 1 possède une base 13 munie d'un raccord 14 destiné à assembler la tige 4 de l'instrument 3 dans la tête 2 de la pièce à main à contre-angle 1. Le raccord 14 coopère avec la tige 4 de l'instrument 3 pour assurer la rotation souhaitée de l'instrument 3 et pour assembler en permanence la tige 4 de l'instrument 3 à la tête 2 de la pièce à main à contre-angle 1.

La pièce à main à contre-angle n'est destinée qu'à un usage unique et est jetable. Par conséquent, il est préférable qu'elle soit entièrement fabriquée en matière plastique de manière à limiter son coût total. La tige 4 de l'instrument 3 est de préférence fabriquée dans un matériau pouvant être moulé par injection, un plastique par exemple, et la lame 6 qui constitue la pièce de travail de l'instrument 3 est de préférence en acier, pour limiter là encore le coût total d'une pièce à main à contre-angle 1 à usage unique. Avantageusement, la tige 4 sera surmoulée sur la lame 6 de l'instrument 3 afin de fixer directement la lame 6 à la tige 4.

Le raccord 14 est aligné dans le même axe que la tige 4 de l'instrument 3 et que le pivot 9 qui engage l'axe 10 de la tête 2, de sorte que la tige 4 de l'instrument 3 soit libre de tourner dans la tête 2 de la pièce à main à contre-angle 1, tout en fixant de façon permanente la tige 4 de l'instrument 3 à la tête 2 de la pièce à main à contre-angle 1. Le raccord 14 forme un collier destiné à engager la tige 4 adjacente à la partie de surface lisse 7, et à retenir la tige 4 dans la tête 2. Sur la figure 4, le raccord 14 est sensiblement en forme de losange et, sur la figure 5, il est sensiblement de forme ovale.

Une paire d'ergots 15 dépassant du raccord 14 coopère de préférence avec une bride 16 ménagée sur la tige 4, adjacente à la partie de surface lisse 7, pour faciliter l'engagement de la tige 4 dans le raccord 14. Sur la figure 4, les ergots 15 sont placés sur les côtés opposés de la diagonale courte de l'ouverture en losange et, sur la figure 5, les ergots 14 sont placés sur les côtés opposés de l'axe court de l'ouverture ovale.

La pièce à main à contre-angle 1 de la présente invention présente un intérêt économique, dans la mesure où l'instrument 3 et le contre-angle 1 sont fabriqués de telle manière que l'assemblage résultant ne peut être utilisé qu'une seule une fois. De ce fait, l'utilisation de la pièce à main à contre-angle 1 évite toute contamination car l'ensemble est conçu pour être jetable, ce qui dispense le praticien de manipuler l'instrument 3.

On comprendra bien que l'homme du métier sera capable d'apporter diverses modifications aux détails, matériaux et disposition des pièces qui ont été décrits et illustrés dans les présentes afin d'expliciter la nature de cette invention, mais ces modifications resteront dans le cadre du principe et de la portée de l'invention, tels que formulés dans les revendications ci-après.

## Revendications

1. Contre-angle endodontique (1) comprenant une tête (2) destinée à recevoir un instrument endodontique (3) de sorte qu'elle le supporte, l'instrument endodontique comprenant une tige (4) logée dans la tête, de sorte que la tige pénètre dans la tête du contre-angle, **caractérisé en ce que** la tige est associée en rotation à la tête de sorte que l'instrument soit libre de tourner dans la tête,la tige comprenant un pignon (5) coopérant avec un arbre d'entraînement associé au contre-angle endodontique, pour la rotation de l'instrument, et une lame (6) assemblée de manière fixe au pignon, celui-ci étant surmoulé sur la lame de l'instrument et qu'il comporte un raccord (14) destiné à assembler en permanence la tige de l'instrument dans la tête du contre-angle.

2. Contre-angle endodontique selon la revendication 1, dans lequel l'instrument endodontique est un instrument canalaire.

3. Contre-angle endodontique selon la revendication 1, dans lequel le pignon est fabriqué dans un matériau moulable par injection.

4. Contre-angle endodontique selon la revendication 3, dans lequel le matériau moulable par injection est un plastique.

5. Contre-angle endodontique selon la revendication 1, dans lequel le contre-angle est entièrement en plastique.

6. Contre-angle endodontique selon la revendication 1, dans lequel le contre-angle fonctionne selon un mouvement alternatif.

7. Contre-angle endodontique selon la revendication 1, dans lequel le raccord est aligné dans l'axe de la tige.

8. Contre-angle endodontique selon la revendication 7, dans lequel le pignon est aligné dans l'axe du raccord et de la tige.

9. Contre-angle endodontique selon la revendication 7, dans lequel la tige comprend un pivot engageant un axe associé à la tête, et dans lequel le pivot et l'axe sont alignés dans le même axe que le raccord et la tige.

10. Contre-angle endodontique selon la revendication 1, dans lequel le raccord est un collier qui engage en permanence des parties adjacentes de la tige dans la tête du contre-angle.

11. Contre-angle endodontique selon la revendication 10, dans lequel la tige comprend en outre une bride située le long des parties de la tige adjacentes au collier.

12. Contre-angle endodontique selon la revendication 10, comprenant en outre une paire d'ergots placés sur les côtés opposés du collier et dépassant de ceux-ci.

13. Contre-angle endodontique selon la revendication 12, dans lequel la tige comprend en outre une bride située le long des parties de la tige adjacentes au collier et coopérant avec les ergots.

14. Contre-angle endodontique selon l'une quelconque des revendications 1 à 13, **caractérisé en ce que** le raccord (14) est sensiblement en forme de losange ou ovale.
